# EUROPEAN PATENT APPLICATION

(11) **EP 4 589 689 A1**
(43) Date of publication of application: **23.07.2025**
(21) Application number: 22968276.0
(22) Date of filing: 16.12.2022
(51) Int. Cl.: H01M 4/525, H01M 4/505, H01M 4/62, H01M 10/0525

(54) **POSITIVE ELECTRODE MATERIAL AND PREPARATION METHOD THEREFOR, POSITIVE ELECTRODE SHEET, SECONDARY BATTERY AND ELECTRIC DEVICE**

(71) Applicant: CONTEMPORARY AMPEREX TECHNOLOGY (HONG KONG) LIMITED, Hong Kong (HK)
(72) Inventor: JIN, Chao, Ningde, Fujian 352100 (CN); WU, Zirui, Ningde, Fujian 352100 (CN); REN, Miaomiao, Ningde, Fujian 352100 (CN); YE, Yonghuang, Ningde, Fujian 352100 (CN)
(74) Representative: Jacob, Reuben Ellis
(86) International application number: PCT/CN2022/139754
(87) International publication number: WO 2024/124572

(57) **Abstract**

A positive electrode material and a preparation method therefor, and a positive electrode sheet, a secondary battery and an electric device which comprise the positive electrode material. The positive electrode material comprises positive electrode material particles, the positive electrode material particles comprising a matrix and modified elements, wherein the matrix comprises LiNixCoyMnzO2, where x ≥ 0.8, y ≤ 0.2, x + y + z = 1, and the modified elements comprise a rare-earth element and/or a refractory metal element. High-nickel ternary particles are modified by means of the rare-earth element and/or the refractory metal element, such that the cycling stability of the positive electrode material can be improved.

## Description

### TECHNICAL FIELD

This application relates to the field of batteries, and in particular, to a positive electrode material, a preparation method thereof, a positive electrode plate, a secondary battery, and an electric apparatus.

### BACKGROUND

With the introduction of carbon neutrality goals, developing abundant and low-cost positive electrode materials to produce high energy density batteries remains a significant challenge in meeting the increasing demand for range in electric apparatuses such as a long-range electric vehicle. The high-nickel layered material, with advantages such as high capacity and low cost, is considered one of the most promising positive electrode materials for lithium-ion batteries. The widely used polycrystalline high-nickel positive electrodes currently have poor cycling stability during deep charging and discharging, which severely limits their commercial applications.

### SUMMARY

### TECHNICAL PROBLEMS

This application provides a positive electrode material, a preparation method thereof, a positive electrode plate, a secondary battery, and an electric apparatus, which can improve the cycling stability of the positive electrode material.

### PROBLEM RESOLVING SOLUTION

### TECHNICAL SOLUTION

According to a first aspect, this application provides a positive electrode material. The positive electrode material includes positive electrode material particles, and the positive electrode material particle includes a matrix and a modifying element, where:
the matrix includes LiNixCoyMnzO2, where x≥0.8, y≤0.12, and x+y+z=1; and
the modifying element includes a rare earth element and/or a refractory metal element.

In the technical solution of the embodiments of this application, the rare earth element and/or refractory metal element is used to modify high-nickel ternary particles. Rare earth metal atoms (which may be referred to as element A in the following) can enter the surface structure of the positive electrode material to form a fast ion conductive network rich in element A on the surface of high-nickel ternary particles, isolating the electrolyte and reducing side reactions, thereby improving cycling performance. The refractory metal element (which may be referred to as element B in the following) can enter the high-nickel positive electrode bulk phase and form a stable structure with high bond energy, reducing undesirable phases formed such as rock salt phase under high voltage, and improving cycling performance. Thereby, the high-nickel ternary particles being modified using the rare earth element and/or refractory metal element can improve the cycling stability of the positive electrode material.

In some embodiments, the rare earth element is at least partially located on a surface of the matrix. When the rare earth element is used to modify high-nickel ternary particles, rare earth metal atoms (which may be referred to as element A in the following) can at least partially enter the surface structure of the positive electrode material to form a fast ion conductive network rich in element A on the surface of high-nickel ternary particles, isolating the electrolyte and reducing side reactions, thereby improving cycling performance.

In some embodiments, the refractory metal element is at least partially located in the matrix. When the refractory metal element is used to modify the high-nickel ternary particles, the refractory metal element can at least partially enter the high-nickel positive electrode bulk phase to form a stable structure with high bond energy, reducing undesirable phases formed such as rock salt phase under high voltage, and improving cycling performance.

In some embodiments, the rare earth element includes at least one of lanthanum, cerium, praseodymium, neodymium, promethium, samarium, europium, gadolinium, terbium, dysprosium, holmium, erbium, thulium, ytterbium, and lutetium. The foregoing rare earth element being selected to modify the high-nickel ternary particles can significantly improve the cycling performance of the high-nickel ternary particles as the positive electrode material.

In some embodiments, the rare earth element is lanthanum. Lanthanum being selected to modify the high-nickel ternary particles can more significantly improve the cycling performance of the high-nickel ternary particles as the positive electrode material, and the modifying process is easy to implement.

In some embodiments, the refractory metal element includes at least one of titanium, zirconium, niobium, vanadium, molybdenum, and tungsten. Selecting the foregoing refractory metal element to modify the high-nickel ternary particles can significantly improve the cycling performance of the high-nickel ternary particles as the battery positive electrode material.

In some embodiments, the refractory metal element is niobium. Niobium being selected to modify the high-nickel ternary particles can more significantly improve the cycling performance of the high-nickel ternary particles as the battery positive electrode material, and the modifying process is easy to implement.

In some embodiments, the modifying element is combined with the matrix through doping. The modifying element being combined with the matrix through doping can improve the combination effect between the modifying element and the matrix, and reduce the possibility that the modifying element is separated from the matrix, thus ensuring the modifying effect on the high-nickel ternary particles.

In some embodiments, a doping mass percentage of the modifying element is 1% to 10% given that mass of the positive electrode material is 100%. With the doping mass percentage of the modifying element controlled from 1% to 10%, the high-nickel ternary particles are modified better, and the costs are easy to control.

In some embodiments, a doping mass percentage of the modifying element is 3% to 5% given that mass of the positive electrode material is 100%. The modifying element being controlled in the doping amount range shows more significant modifying effect on the high-nickel ternary particles.

In some embodiments, LiNixCoyMnzO2 is a single-crystal particle. The single-crystal high-nickel ternary particles are selected, where their non-porous and high-strength characteristics help to improve the compacted density of the positive electrode material, thus improving the energy density of the batteries. In addition, such selection also helps to improve the structural stability and cycling performance of the positive electrode material and shows greater stability under high voltage.

In some embodiments, Dᵥ50 of LiNixCoyMnzO2 is greater than or equal to 4 µm. Dᵥ50 of the high-nickel ternary particles being limited to be greater than or equal to 4 µm can reduce the breakage rate of the particles during cycling, and helps to obtain a better compacted density, so as to obtain a positive electrode material with better structural stability and cycling performance.

In some embodiments, SPAN of LiNixCoyMnzO2 is greater than or equal to 1.6. SPAN of the high-nickel ternary particles being limited to be greater than or equal to 1.6 can reduce the breakage rate of the particles during cycling, and helps to obtain a better compacted density, so as to obtain a positive electrode material with better structural stability and cycling performance.

According to a second aspect, this application provides a preparation method of the positive electrode material, including the following step:
mixing a modifier with LiNixCoyMnzO2, and calcining the mixture to obtain the positive electrode material, where
in LiNixCoyMnzO2, x≥0.8, y≤0.12, and x+y+z=1; and
the modifier includes a rare earth element and/or a refractory metal element.

In the technical solution of the embodiments of this application, as the modifier including the rare earth element and/or refractory metal element is mixed and calcined with LiNixCoyMnzO2 to produce high-nickel ternary particles modified using the rare earth element and/or refractory metal element, the structural stability and cycling performance of the high-nickel ternary particles as the battery positive electrode material are effectively improved.

In some embodiments, the modifier includes LiXAYBZO(X+3Y+5Z)/2, LiXAYO(X+3Y)/2, or LiXBZO(X+5Z)/2, X≥5, Y≥3, Z≥2, where A is any one of lanthanum, cerium, praseodymium, neodymium, promethium, samarium, europium, gadolinium, terbium, dysprosium, holmium, erbium, thulium, ytterbium, and lutetium, and B is any one of titanium, zirconium, niobium, vanadium, molybdenum, and tungsten.

LiXAYBZO(X+3Y+5Z)/2, LiaAbO(a+3b)/2, and LiaBcO(a+5c)/2 are used as modifiers to be mixed and calcined with LiNixCoyMnzO2, so as to respectively and correspondingly produce high-nickel ternary particles modified using the rare earth element and the refractory metal element, high-nickel ternary particles modified using the rare earth element, and high-nickel ternary particles modified using the refractory metal element. Such three manners can all improve the structural stability and cycling performance of the high-nickel ternary particles as the battery positive electrode material.

In some embodiments, the mixture is calcined at 600°C to 800°C for 1 h to 3 h. Under such calcination conditions, the positive electrode material is prepared with high efficiency.

According to a third aspect, this application provides a positive electrode plate, including the positive electrode material according to the foregoing embodiments or the positive electrode material prepared in the foregoing embodiments.

According to a fourth aspect, this application provides a secondary battery, including the positive electrode plate in the foregoing embodiments.

According to a fifth aspect, this application provides an electric apparatus including the secondary battery in the foregoing embodiments.

### BENEFICIAL EFFECTS OF PRESENT INVENTION

### BENEFICIAL EFFECTS

In the technical solution of the embodiments of this application, the rare earth element and/or refractory metal element is used to modify high-nickel ternary particles. Rare earth metal atoms (which may be referred to as element A in the following) can enter the surface structure of the positive electrode material to form a fast ion conductive network rich in element A on the surface of high-nickel ternary particles, isolating the electrolyte and reducing side reactions, thereby improving cycling performance. The refractory metal element (which may be referred to as element B in the following) can enter the high-nickel positive electrode bulk phase to form a stable structure with high bond energy, reducing undesirable phases formed such as rock salt phase under high voltage, and improving cycling performance. Thereby, the high-nickel ternary particles being modified using the rare earth element and/or refractory metal element can improve the cycling stability of the positive electrode material.

### BRIEF DESCRIPTION OF DRAWINGS

### DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show merely some of the embodiments of this application, and persons of ordinary skill in the art may still derive other related drawings from these accompanying drawings without creative efforts.

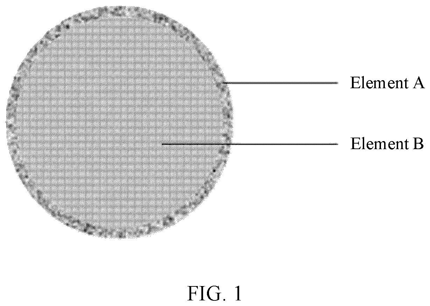

FIG. 1 is a schematic structural diagram of a positive electrode material according to some embodiments of this application.

The realization of the objective, functional features, and advantages of this application are further described with reference to the embodiments and the accompanying drawings.

### DESCRIPTION OF EMBODIMENTS

### EMBODIMENTS OF PRESENT INVENTION

The following specifically discloses embodiments of a positive electrode material, a preparation method thereof, a positive electrode plate, a secondary battery, a battery module, a battery pack, and an electrical apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, such as, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method including steps (a) and (b) indicates that the method may include steps (a) and (b) performed sequentially, or may include steps (b) and (a) performed sequentially. For example, that the method may further include step (c) indicates that step (c) may be added to the method in any sequence. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

With the introduction of carbon neutrality goals, developing abundant and low-cost positive electrode materials to produce high energy density batteries remains a significant challenge in meeting the increasing demand for range in electric apparatuses such as a long-range electric vehicle. The high-nickel layered material, with advantages such as high capacity and low cost, is considered one of the most promising positive electrode materials for lithium-ion batteries. The widely used polycrystalline high-nickel positive electrodes currently have poor cycling stability during deep charging and discharging, which severely limits their commercial applications.

Based on the above consideration, to address the issue of poor cycling performance that limits the practical application of the high-nickel positive electrode material, the inventors have conducted in-depth research and designed a scheme for modifying high-nickel positive electrode material, where the high-nickel positive electrode material is doped with ions to improve its cycling performance.

Specifically, in some embodiments of this application, the positive electrode material includes positive electrode material particles. The positive electrode material particle includes a matrix and a modifying element, where the matrix includes LiNixCoyMnzO2, where x≥0.8, y≤0.12, and x+y+z=1. The modifying element includes a rare earth element and/or a refractory metal element.

In the technical solution of the embodiments of this application, the rare earth element and/or refractory metal element is used to modify high-nickel ternary particles. The rare earth element (which may be referred to as element A in the following) can enter the surface structure of the positive electrode to form a fast ion conductive network rich in element A, isolating the electrolyte and reducing side reactions, thereby improving cycling performance. The refractory metal element (which may be referred to as element B in the following) can enter the high-nickel positive electrode bulk phase to form a stable structure with high bond energy, reducing undesirable phases formed such as rock salt phase under high voltage, and improving cycling performance. Thereby, the high-nickel ternary particles being modified using the rare earth element and/or refractory metal element can improve the cycling stability of the positive electrode material. Relevant performance tests have shown that compared with the modification using a single rare earth element or a single refractory metal element, modification performed on high-nickel ternary particles using both a rare earth element and a refractory metal element shows better modifying effects, especially, in cycle life and storage time.

Rare earth elements are a collective term for a total of 17 elements, including lanthanides (La), scandium (Sc), and yttrium (Y), where lanthanides are a collective term for 15 elements from lanthanum (57th element) to lutetium (71st element) in the periodic table. In theory, all rare earth elements can be used to effectively modify high-nickel ternary particles as described in this application. In some embodiments of this application, the rare earth element is a lanthanide and specifically includes at least one of lanthanum, cerium, praseodymium, neodymium, promethium, samarium, europium, gadolinium, terbium, dysprosium, holmium, erbium, thulium, ytterbium, and lutetium. The foregoing rare earth element being selected to modify the high-nickel ternary particles can greatly improve the cycling performance of the high-nickel ternary particles as the positive electrode material.

In some embodiments of this application, the rare earth element is lanthanum. Lanthanum being selected to modify the high-nickel ternary particles can more significantly improve the cycling performance of the high-nickel ternary particles as the positive electrode material, and the modifying process is easy to implement.

Typical refractory metals include tungsten, tantalum, molybdenum, niobium, hafnium, chromium, vanadium, zirconium, and titanium. In theory, all of the foregoing metal elements can be used to effectively modify high-nickel ternary particles in this application. In some embodiments of this application, the refractory metal element includes at least one of titanium, zirconium, niobium, vanadium, molybdenum, and tungsten. The foregoing refractory metal element being selected to modify the high-nickel ternary particles can greatly improve the cycling performance of the high-nickel ternary particles as the positive electrode material.

In some embodiments of this application, the refractory metal element is niobium. Niobium being selected to modify the high-nickel ternary particles can more significantly improve the cycling performance of the high-nickel ternary particles as the battery positive electrode material, and the modifying process is easy to implement.

In some embodiments of this application, the rare earth element is at least partially located on a surface of the matrix. When the rare earth element is used to modify high-nickel ternary particles, rare earth metal atoms can at least partially enter the surface structure of the positive electrode material to form a fast ion conductive network rich in element A on the surface of high-nickel ternary particles, isolating the electrolyte and reducing side reactions, thereby improving cycling performance.

In some embodiments of this application, the refractory metal element is at least partially located in the matrix. When the refractory metal element is used to modify the high-nickel ternary particles, the refractory metal element can at least partially enter the high-nickel positive electrode bulk phase to form a stable structure with high bond energy, reducing undesirable phases formed such as rock salt phase under high voltage, and improving cycling performance.

In some embodiments, the modifying element is combined with the matrix through doping. The modifying element being combined with the matrix through doping can improve the combination effect between the modifying element and the matrix, and reduce the possibility that the modifying element is separated from the matrix, thus ensuring the modifying effect on the high-nickel ternary particles. Specifically, the foregoing doping includes surface doping and/or bulk doping. When the rare earth element is used as the modifying element, surface doping is performed, meaning the matrix surface is coated with the rare earth element. When the refractory metal element is used as the modifying element, bulk-doping is performed, meaning it enters the bulk phase of the matrix. In some embodiments of the present invention, the surface doping and bulk doping can be both implemented by mixing and calcining a substance containing a modifying element with the matrix.

In some specific embodiments of this application, the modifying element includes a lanthanide, and the lanthanide is at least partially located on the surface of the high-nickel ternary particles, which can be regarded as modification on the surface layer of the high-nickel ternary particles. Atoms A enter the surface structure of the positive electrode material to form a fast ion conductive network rich in element A, isolating the electrolyte and reducing side reactions, thereby improving cycling performance. The high-nickel ternary particles may be modified using the lanthanide in the following manner: LiXAYO(X+3Y)/2 (X≥5, Y≥3, both X and Y are integers, and A is any one of lanthanum, cerium, praseodymium, neodymium, promethium, samarium, europium, gadolinium, terbium, dysprosium, holmium, erbium, thulium, ytterbium, and lutetium) is mixed and calcined with the LiNixCoyMnzO2 high-nickel ternary particles.

In some specific embodiments of this application, the modifying element includes at least one of titanium, zirconium, niobium, vanadium, molybdenum, and tungsten. The modifying element is at least partially located in the high-nickel ternary particles, which may be regarded as modification in the inner layer of the high-nickel ternary particles. The modifying element B enters the high-nickel positive electrode bulk phase to form a stable structure with high bond energy, reducing undesirable phases formed such as rock salt phase under high voltage, and improving cycling performance. The high-nickel ternary particles may be modified using at least one of titanium, zirconium, niobium, vanadium, molybdenum, and tungsten in the following manner: LiXBZO(X+5Z)/2 (X≥5, Z≥2, both X and Z are integers, and B is any one of titanium, zirconium, niobium, vanadium, molybdenum, and tungsten) is mixed and calcined with the LiNixCoyMnzO2.

In some specific embodiments of this application, referring to FIG. 1, the modifying element includes a lanthanide and a refractory metal element. The lanthanide metal is at least partially located on the surface of the high-nickel ternary particles, to modify the surface layer of the high-nickel ternary particles. Atoms A enter the surface structure of the positive electrode to form a fast ion conductive network rich in element A, isolating the electrolyte and reducing side reactions, thereby improving cycling performance. The refractory metal element is at least partially located in the high-nickel ternary particles to modify the inner layer of the high-nickel ternary particles. The modifying element B enters the high-nickel positive electrode bulk phase to form a stable structure with high bond energy, reducing undesirable phases formed such as rock salt phase under high voltage, and improving cycling performance. In this way, the lanthanide and the refractory metal element being used for mutual modification allows for more stable overall structure of the high-nickel positive electrode material, and more stable cycling performance. The high-nickel ternary particles may be modified using modifying elements including the lanthanide and the refractory metal element in the following manner: LiXAYBZO (X+3Y+5Z)/2 (X≥5, Y≥3, Z≥2, all X, Y, Z are integers, A is any one of lanthanum, cerium, praseodymium, neodymium, promethium, samarium, europium, gadolinium, terbium, dysprosium, holmium, erbium, thulium, ytterbium, and lutetium, and B is any one of titanium, zirconium, niobium, vanadium, molybdenum, and tungsten)is mixed and calcined with the LiNixCoyMnzO2.

SEM and EDS tests are conducted on the high-nickel ternary particles of LiNixCoyMnzO2 before and after modification. It has been found that element A is concentrated in the surface layer of the high-nickel ternary particles, presenting shallow element deposition, and the particle bulk phase is doped with element B, presenting more obvious element deposition. This indicates that the modification method provided in this application can achieve surface modification, inner-layer modification, or combined surface/bulk doping modification.

Further, in some embodiments, a doping mass percentage of the modifying element is 1% to 10% given that mass of the positive electrode material is 100%. With the doping mass percentage of the modifying element controlled from 1% to 10%, the high-nickel ternary particles are modified better, and the costs are easy to control. It can be understood that when the modifying element includes element A or element B, the doping amount of the modifying element refers to the doping amount of element A or element B in the high-nickel ternary particles. When the modifying element includes both element A and element B, the doping amount of the modifying element refers to the total doping amount of element A and element B.

In some embodiments, a doping mass percentage of the modifying element is 3% to 5% given that mass of the positive electrode material is 100%. The modifying element being controlled in the doping amount range shows more significant modifying effect on the high-nickel ternary particles and better cycling effect.

In some embodiments of this application, LiNixCoyMnzO2 is a single-crystal particle. The single-crystal high-nickel ternary particles are selected, where their non-porous and high-strength characteristics help to improve the compacted density of the positive electrode material, thus improving the energy density of the batteries. In addition, such selection also helps to improve the structural stability and cycling performance of the positive electrode material and shows greater stability of the single-crystal high-nickel ternary particles under high voltage, with the final voltage being greater than or equal to 4.3 V. Under high voltage of 4.3 V, the contraction of the volume of the polycrystalline high-nickel unit cell is caused by the irreversible phase transition from H2 to H3, and the formation of nanocracks cannot be avoided in a highly delithiated state. The cathode surface inevitably comes into contact with the electrolyte, leading to severe interfacial reaction. In this application, ion doping can accelerate the conduction of electrons/ions and stabilize the internal lattice structure, and doping elements with high metal-oxygen (M-O) bond energy can inhibit the migration of transition metal ions (TMs), alleviating structural degradation and promoting the diffusion of Li⁺. In addition, in this application, encapsulation of the fast ion conductive network formed through modification with the rare earth element can improve the low SOC dynamics and enhance the power performance of the lithium-ion battery.

When the high-nickel material is used as the battery positive electrode material, the particle size of the high-nickel material also affects the relevant performance of the battery. The following Table 1 shows some performance parameters under different particle sizes.

**Table 1 Performance parameters of LiNixCoyMnzO2 of different particle sizes**

| Particle size Dᵥ50 (µm) | Energy density | 25°C 10%SOC DCR | Cycle life at 25°C, 2.8 V to 4.3 V | 4.3 V storage at 60°C (days) |
|---|---|---|---|---|
| 3 | High | High | 1200 | 280 |
| 5 | Relatively high | Relatively high | 1500 | 300 |
| 10 | Moderate | Relatively high | 1650 | 500 |

It can be learned from Table 1 that as the particle size of LiNixCoyMnzO2 increases, the energy density slightly decreases, while performance of the DCR, cycling, and storage is improved significantly. Additionally, large particle single crystals are less prone to cracking and exhibit good high-voltage stability.

In some embodiments of this application, Dᵥ50 of LiNixCoyMnzO2 is greater than or equal to 4 µm. Dᵥ50≥4 µm means that a corresponding particle size is greater than or equal to 4 µm when a particle volume percentage reaches 50%. In this way, Dᵥ50 of the high-nickel ternary particles being limited to be greater than or equal to 4 µm can prevent, when large and small particles accumulate densely, large particles accumulating from likely breakage due to excessively large and local stress, thereby reducing the breakage rate of the high-nickel ternary particles during cycling, and helping to obtain a better compacted density, so as to obtain a positive electrode material with better structural stability and cycling performance. Further, in actual application, on the base of Dᵥ50≥4 µm, a more specific particle range is selected with reference to specific performance parameters required by the battery.

In some embodiments of this application, SPAN of LiNixCoyMnzO2 is greater than or equal to 1.6. SPAN=(Dᵥ90-Dᵥ10)/Dᵥ50, where Dᵥ90 µm refers to a corresponding particle size at 90% in the cumulative volume distribution, Dᵥ10 µm refers to a corresponding particle size at 10% in the cumulative volume distribution, and Dᵥ50 µm refers to a corresponding particle size at 50% in the cumulative volume distribution. In this way, SPAN of the high-nickel ternary particles being limited to be greater than or equal to 1.6 can prevent, when large and small particles accumulate densely, large particles accumulating from likely breakage due to excessively large local stress, thereby reducing the breakage rate of the particles during cycling, and helping to obtain a better compacted density, so as to obtain a positive electrode material with better structural stability and cycling performance.

According to a second aspect, this application provides a preparation method of the positive electrode material in the foregoing embodiment. Specifically, the preparation method of the positive electrode material includes the following step:
mixing a modifier with LiNixCoyMnzO2, and calcining the mixture to obtain the positive electrode material, where in LiNixCoyMnzO2, x≥0.8, y≤0.12, and x+y+z=1; and the modifier includes a rare earth element and/or a refractory metal element.

In the technical solution of the embodiments of this application, as the modifier including the rare earth element (A) and/or refractory metal element (B) is mixed and calcined with LiNixCoyMnzO2, that is, the rare earth element and/or refractory metal element is combined with LiNixCoyMnzO2 through doping, to produce high-nickel ternary particles modified using the rare earth element and/or refractory metal element, the structural stability and cycling performance of the high-nickel ternary particles as the battery positive electrode material are effectively improved.

In some embodiments of this application, the rare earth element includes a lanthanide, specifically including at least one of lanthanum, cerium, praseodymium, neodymium, promethium, samarium, europium, gadolinium, terbium, dysprosium, holmium, erbium, thulium, ytterbium, and lutetium. The refractory metal element includes at least one of titanium, zirconium, niobium, vanadium, molybdenum, and tungsten. Correspondingly, the modifier includes LiXAYBZO(X+3Y+5Z)/2, LiXAYO(X+3Y)/2, or LiXBZO(X+5Z)/2, X≥5, Y≥3, Z≥2, and X, Y, Z are all integers, where A is any one of lanthanum, cerium, praseodymium, neodymium, promethium, samarium, europium, gadolinium, terbium, dysprosium, holmium, erbium, thulium, ytterbium, and lutetium, and B is any one of titanium, zirconium, niobium, vanadium, molybdenum, and tungsten.

LiXAYBZO(X+3Y+5Z)/2, LiaAbO(a+3b)/2, and LiaBcO(a+5c)/2 are used as modifiers to be mixed and calcined with LiNixCoyMnzO2, so as to respectively and correspondingly produce high-nickel ternary particles with their surface modified using the lanthanide, high-nickel ternary particles with their inside modified using the refractory metal element, and high-nickel ternary particles with their surface modified using the rare earth element and with their inside modified using the refractory metal element. Such three manners can all improve the structural stability and cycling performance of the high-nickel ternary particles as the battery positive electrode material.

In some embodiment of this application, the modifier is LiXAYO (X+3Y)/2 (X≥5, Y≥3, both X and Y are integers, and A is any one of lanthanum, cerium, praseodymium, neodymium, promethium, samarium, europium, gadolinium, terbium, dysprosium, holmium, erbium, thulium, ytterbium, and lutetium). LiXAYO (X+3Y)/2 is mixed and calcined with LiNixCoyMnzO2 to modify the surface of the high-nickel material. Atoms A enter the surface structure of the positive electrode material to form a fast ion conductive network rich in element A, isolating the electrolyte and reducing side reactions, thereby improving cycling performance.

In some embodiments of this application, the modifier LiXBZO(X+5Z)/2 (X≥5, Z≥2, both X and Z are integers, and B is any one of titanium, zirconium, niobium, vanadium, molybdenum, and tungsten) is mixed and calcined with the LiNixCoyMnzO2, to modify the inner layer of the high-nickel material. Element B enters the high-nickel positive electrode bulk phase to form a stable structure with high bond energy, reducing undesirable phases formed such as rock salt phase under high voltage, and improving cycling performance.

In some embodiments of this application, the modifier is LiXAYBZO (X+3Y+5Z)/2 (X≥5, Y≥3, Z≥2, all X, Y, Z are integers, A is any one of lanthanum, cerium, praseodymium, neodymium, promethium, samarium, europium, gadolinium, terbium, dysprosium, holmium, erbium, thulium, ytterbium, and lutetium, and B is any one of titanium, zirconium, niobium, vanadium, molybdenum, and tungsten. LiXAYBZO (X+3Y+5Z)/2 is mixed and calcined with LiNixCoyMnzO2 to modify the surface and inside of the high-nickel material. The co-doping of the lanthanide metal and element B further improves the overall structural stability and cycling stability of the high-nickel material. In addition, surface A and Li⁺ form a fast ion conductive network, to provide a fast diffusion pathway for lithium ion transport, further improving the power performance of the battery.

In some embodiments of this application, the mixture is calcined at 600°C to 800°C for 1 h to 3 h. Under such calcination conditions, the positive electrode material is prepared with high efficiency.

In addition, in some embodiments of this application, a preparation method of single-crystal LiNixCoyMnzO2 is also provided, including the following steps: Soluble sulfates of nickel, cobalt, and manganese are prepared into a solution with a total metal-ion molar concentration of 1.0 mol/L-2.2 mol/L at a molar ratio of nickel, cobalt, and manganese ions (for example, 83:12:5), the prepared solution is sequentially added with a sodium hydroxide solution (with a concentration of 4 mol/L-8 mol/L) and an ammonia solution (with a concentration of 0.1mol/L-0.5 mol/L), followed by mixing and stirring. The co-precipitation reaction is conducted under a nitrogen atmosphere, with the pH value of the co-precipitation reaction controlled at 9-12 and the reaction temperature at 40°C-60°C, to obtain a hydroxide precursor containing nickel, cobalt, and manganese. Next, the prepared precursor is washed, dried, and added with LiOH and KCl fluxing agents, followed by sintering at 300°C-500°C for 5 h-7 h, calcining at 700°C-900°C for 12 h-18 h, and then annealing in oxygen at 400°C-600°C for 2-4 h, to obtain the single-crystal LiNixCoyMnzO2 (x≥0.8, y≤0.12, x+y+z=1) high-nickel ternary material powder.

In addition, in some embodiments of this application, taking an example in which LiXAYBZO (X+3Y+5Z)/2 (X≥5, Y≥3, Z≥2, A is lanthanum, and B is niobium) is used to modify LiNixCoyMnzO2, a more specific embodiment for preparing a positive electrode material is also provided, including the following steps: LiNO3, La(CH3COO)3, and C4H4NNbO9·nH2O in a stoichiometric ratio, used as materials for preparing LiXAYBZO (X+3Y+5Z)/2, are added into ethanol, followed by adding single-crystal ternary powder. Then, the prepared solution is stirred at 45°C-60°C until the solvent completely evaporates, and then the prepared mixture is calcined at 600°C-800°C for 1 h-3 h to obtain the high-nickel material modified by LiXAYBZO(X+3Y+5Z)/2.

According to a third aspect, this application provides a positive electrode plate, including the positive electrode material according to the foregoing embodiments.

In some embodiments of this application, the positive electrode plate includes a positive electrode current collector and a positive electrode coating layer applied to the positive electrode current collector. The positive electrode coating layer is formed using a positive slurry, and the positive slurry includes a positive electrode active material, a binder, and a conductive material. The binder includes polyvinyl alcohol, carboxymethyl cellulose, hydroxypropyl cellulose, diacetate cellulose, polyvinyl chloride, polyethylene, polypropylene, styrene-butadiene rubber, acrylatemodified styrene-butadiene rubber, epoxy resin, or nylon, which is not limited in this application. The conductive material includes carbon black, acetylene black, Ketjen black, carbon fiber, carbon nanotubes, metal powder, metal fiber, copper, nickel, aluminum, silver, or polyphenylene derivatives, which is not limited in this application.

In some embodiments of this application, a preparation method of a positive electrode plate is provided, including the following steps: A positive electrode active material (the modified high-nickel ternary material provided by this application), an acetylene black conductive agent, and a polyvinylidene fluoride (PVDF) binder are fully stirred and uniformly mixed in an N-methylpyrrolidone (NMP) solvent at a weight ratio of 96.5:1.5:2 to obtain a positive electrode slurry, and then the positive electrode slurry is uniformly applied onto a positive electrode current collector with a base coating, followed by drying, cold pressing, and cutting to obtain a positive electrode plate.

The positive electrode plate proposed in the embodiments of this application has all the beneficial effects of the positive electrode material of the foregoing embodiment. Details are not described herein.

According to a fourth aspect, this application provides a secondary battery, including the positive electrode plate in the foregoing embodiments.

The secondary battery includes the positive electrode plate as described in the foregoing embodiments, and also includes a negative electrode plate, a separator, and an electrolyte. The secondary battery may be a battery cell. Taking the lithium-ion battery as an example, working of the lithium-ion battery cell mainly relies on migration of lithium ions between the positive electrode plate and the negative electrode plate. A film structure with three layers of materials in a cylinder-shaped battery cell is wound into a cylinder-shaped electrode assembly, and a film structure in a cuboid battery cell is approximately wound or laminated into a cuboid-shaped electrode assembly.

In a typical battery cell structure, the battery cell includes a housing, an electrode assembly, and an electrolyte. The electrode assembly is accommodated in the housing of the battery cell, and includes a positive electrode plate, a negative electrode plate, and a separator. The housing includes a housing body and an end cover. The housing includes an accommodating chamber formed by a plurality of walls, and an opening. The end cover is disposed at the opening to seal the accommodating chamber. In addition to the electrode assembly, the accommodating chamber further accommodates the electrolyte. The positive electrode plate and the negative electrode plate in the electrode assembly each include a tab. To allow a large current to pass through without any fusing, multiple positive electrode tabs are provided and stacked together, and multiple negative electrode tabs are provided and stacked together. The tab is electrically connected to electrode terminal outside the battery cell via a connection member, and the electrode terminal generally includes a positive electrode terminal and a negative electrode terminal. For a cuboid battery cell, the electrode terminal is generally disposed on the end cover. A plurality of battery cells are connected in series and/or in parallel through electrode terminals for various application scenarios.

Batteries formed by wound jelly rolls are referred to as wound batteries. Wound batteries are also referred to as battery cells, which are referred to as wound cells by professionals in the battery industry. Compared with flat plate batteries, wound batteries are formed by winding electrode plates of only about 1 mm under high pressure. Special manufacturing techniques endow these batteries with many characteristics: a remarkably high-rate discharge capability, allowing the maximum discharge rate to reach 18 C to 30 C; excellent high- and low-temperature performance, allowing for operation at -55°C to 150°C; stable high output voltage and higher energy density; a strong structure with excellent anti-seismic performance; no free electrolyte (for example, colloidal acid), allowing for placement in any direction; fast charge, making it possible to be charged over 95% of the capacity (at 1C) in 40 minutes; an ultra-long lifespan, allowing for a float service life of over 8 years; and an extremely high resistance to small-current deep discharge.

The electrolyte used in this application can be any known electrolyte in existing technologies, including an organic solvent, a lithium salt, and an additive. The separator applicable to this application may be a known separator in the prior art.

The secondary battery proposed in this application has all the beneficial effects of the foregoing positive electrode material. Details are not described herein.

The secondary battery may be a battery module. The battery module is formed by electrically connecting a specific quantity of secondary batteries and putting them into a frame to protect the battery cells from external impact, heat, vibration, and the like. The common battery module typically includes two end plates with multiple battery cells (secondary batteries) arranged between them. The end plate with a battery module output electrode is also known as the output electrode end plate, while the end plate without a battery module output electrode is known as the non-output electrode end plate.

The secondary battery may further be a battery pack. In some battery production and processing technologies, a plurality of battery cells are first integrated into a battery module, and then the battery module is packaged in a battery box to form a battery pack. Multiple battery modules can be arranged in a single row or multiple rows in the battery pack. The arrangement of multiple rows of battery modules may be in double rows and multiple columns, multiple rows and double columns, multiple rows and multiple columns, and the like. Taking an example of battery modules in double rows and multiple columns packaged in the battery pack, the first end plate of each column is generally a head output electrode end plate, the two adjacent end plates between two rows of battery modules are middle non-output electrode end plates, and the last end plate of each column is a tail non-output electrode end plate. The head output electrode end plate and one of the middle non-output electrode end plates belong to the first row of battery modules. One of the middle non-output electrode end plates and the tail output electrode end plate belong to the second row of battery modules.

According to a fifth aspect, this application provides an electric apparatus including the secondary battery according to the foregoing embodiments.

The electric apparatus provided by this application includes but is not limited to: mobile phones, portable devices, notebook computers, electric bicycles, electric vehicles, ships, spacecrafts, electric toys, electric tools, and the like. For example, the spacecraft includes an airplane, a rocket, a space shuttle, and a spaceship; the electric toy includes a fixed or mobile electric toy, for example, a game console, an electric vehicle toy, an electric ship toy, an electric airplane toy, and the like; and the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like.

The electric apparatus proposed in this application has all the beneficial effects of the foregoing positive electrode material. Details are not described herein.

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

(1) The preparation of single-crystal LiNixCoyMnzO2: Soluble sulfates of nickel, cobalt, and manganese were prepared into a solution with a total metal-ion molar concentration of 1.5 mol/L at a molar ratio (83:12:5) of nickel, cobalt, and manganese ions. The prepared solution was sequentially added with a sodium hydroxide solution (with a concentration of 6 mol/L) and an ammonia solution (with a concentration of 0.3 mol/L), followed by mixing and stirring. A co-precipitation reaction was conducted under a nitrogen atmosphere, with the pH value of the co-precipitation reaction controlled at 10 and the reaction temperature at 55°C, to obtain a hydroxide precursor (Ni0.83Co0.12Mn0.05)(OH)2. Next, the prepared hydroxide precursor was washed, dried, and added with LiOH and KCl fluxing agents, followed by sintering at 500°C for 6 h, calcining at 800°C for 15 h, and then annealing in oxygen at 600°C for 3 h, to obtain the single-crystal LiNi_{0.8}3Co_{0.12}Mn_{0.05}O₂ high-nickel ternary material powder, where Dᵥ50≥4 µm, and SPAN≥1.6.
(2) The preparation of modified high-nickel material: LiNO3, La(CH3COO)3, and C4H4NNbO9·nH2O in a stoichiometric ratio, used as materials for preparing Li5La3Nb2O12, were added into ethanol, followed by adding single-crystal ternary powder. Then, with the total doping mass percentage of lanthanum and niobium controlled at 1%, the prepared solution was stirred at 55°C until the solvent completely evaporated, and then the prepared mixture was calcined at 700°C for 3 h to obtain the high-nickel material modified by Li5La3Nb2O12 (denoted as LABO) of 1wt%.

### Example 2

Steps herein were basically the same as example 1, except that the total doping mass percentage of lanthanum and niobium was controlled at 3% in step (2).

### Example 3

Steps herein were basically the same as example 1, except that the total doping mass percentage of lanthanum and niobium was controlled at 5% in step (2).

### Example 4

Steps herein were basically the same as example 1, except that the total doping mass percentage of lanthanum and niobium was controlled at 10% in step (2).

### Example 5

(1) The preparation of single-crystal LiNixCoyMnzO2: Soluble sulfates of nickel, cobalt, and manganese were prepared into a solution with a total metal-ion molar concentration of 1.0 mol/L at a molar ratio (85:10:5) of nickel, cobalt, and manganese ions. The prepared solution was sequentially added with a sodium hydroxide solution (with a concentration of 4 mol/L) and an ammonia solution (with a concentration of 0.1 mol/L), followed by mixing and stirring. A co-precipitation reaction was conducted under a nitrogen atmosphere, with the pH value of the co-precipitation reaction controlled at 9 and the reaction temperature at 40°C, to obtain a hydroxide precursor (N1_{0.85}Co_{0.10}Mn_{0.05})(OH)2. Next, the prepared hydroxide precursor was washed, dried, and added with LiOH and KCl fluxing agents, followed by sintering at 500°C for 6 h, calcining at 800°C for 15 h, and then annealing in oxygen at 600°C for 3 h, to obtain the single-crystal LiNi_{0.85}Co_{0.10}Mn_{0.05}O2 high-nickel ternary material powder, where Dᵥ50≥4 µm, and SPAN≥1.6.
(2) The preparation of modified high-nickel material: LiNO3 and C4H4NNbO9·nH2O in a stoichiometric ratio, used as materials for preparing Li6Nb2O8, were added into ethanol, followed by adding single-crystal ternary powder. Then, with the doping mass percentage of niobium controlled at 3%, the prepared solution was stirred at 55°C until the solvent completely evaporated, and then the prepared mixture was calcined at 700°C for 3 h to obtain the high-nickel material modified by Li6Nb2O8 (denoted as LBO) of 3wt%.

### Example 6

(1) The preparation of single-crystal LiNixCoyMnzO2: Soluble sulfates of nickel, cobalt, and manganese were prepared into a solution with a total metal-ion molar concentration of 1.0 mol/L at a molar ratio (84:12:4) of nickel, cobalt, and manganese ions. The prepared solution was sequentially added with a sodium hydroxide solution (with a concentration of 4 mol/L) and an ammonia solution (with a concentration of 0.1 mol/L), followed by mixing and stirring. A co-precipitation reaction was conducted under a nitrogen atmosphere, with the pH value of the co-precipitation reaction controlled at 9 and the reaction temperature at 40°C, to obtain a hydroxide precursor (Ni0.84Co0.12Mn0.04)(OH)2. Next, the prepared hydroxide precursor was washed, dried, and added with LiOH and KCl fluxing agents, followed by sintering at 500°C for 6 h, calcining at 800°C for 15 h, and then annealing in oxygen at 600°C for 3 h, to obtain the single-crystal LiNi0.84Co0.12Mn0.04O2 high-nickel ternary material powder, where Dᵥ50≥4 µm, and SPAN≥1.6.
(2) The preparation of modified high-nickel material: LiNO3 and C4H4NNbO9·nH2O in a stoichiometric ratio, used as materials for preparing Li5La3O7, were added into ethanol, followed by adding single-crystal ternary powder. Then, with the doping mass percentage of lanthanum controlled at 3%, the prepared solution was stirred at 55°C until the solvent completely evaporated, and then the prepared mixture was calcined at 700°C for 3 h to obtain the high-nickel material modified by Li5La3O7 (denoted as LAO) of 3wt%.

### Example 7

(1) The preparation of single-crystal LiNixCoyMnzO2: Soluble sulfates of nickel, cobalt, and manganese were prepared into a solution with a total metal-ion molar concentration of 1.5 mol/L at a molar ratio (83:12:5) of nickel, cobalt, and manganese ions. The prepared solution was sequentially added with a sodium hydroxide solution (with a concentration of 6 mol/L) and an ammonia solution (with a concentration of 0.3 mol/L), followed by mixing and stirring. A co-precipitation reaction was conducted under a nitrogen atmosphere, with the pH value of the co-precipitation reaction controlled at 10 and the reaction temperature at 55°C, to obtain a hydroxide precursor (Ni0.83Co0.12Mn0.05)(OH)2. Next, the prepared hydroxide precursor was washed, dried, and added with LiOH and KCl fluxing agents, followed by sintering at 300°C for 7 h, calcining at 850°C for 16 h, and then annealing in oxygen at 400°C for 4 h, to obtain the single-crystal LiNi_{0.83}Co_{0.12}Mn_{0.05}O2 high-nickel ternary material powder, where Dᵥ50≥4 µm, and SPAN≥1.6.
(2) The preparation of modified high-nickel material: LiNO3 and C4H4NNbO9·nH2O in a stoichiometric ratio, used as materials for preparing Li6Nb2O8, were added into ethanol, followed by adding single-crystal ternary powder. Then, with the doping mass percentage of titanium controlled at 3%, the prepared solution was stirred at 45°C until the solvent completely evaporated, and then the prepared mixture was calcined at 600°C for 3 h to obtain the high-nickel material modified by Li6Ti2O8 (denoted as LBO) of 3wt%.

### Example 8

(1) The preparation of single-crystal LiNixCoyMnzO2: Soluble sulfates of nickel, cobalt, and manganese were prepared into a solution with a total metal-ion molar concentration of 1.5 mol/L at a molar ratio (83:12:5) of nickel, cobalt, and manganese ions. The prepared solution was sequentially added with a sodium hydroxide solution (with a concentration of 6 mol/L) and an ammonia solution (with a concentration of 0.3 mol/L), followed by mixing and stirring. A co-precipitation reaction was conducted under a nitrogen atmosphere, with the pH value of the co-precipitation reaction controlled at 10 and the reaction temperature at 55°C, to obtain a hydroxide precursor (Ni0.83Co0.12Mn0.05)(OH)2. Next, the prepared hydroxide precursor was washed, dried, and added with LiOH and KCl fluxing agents, followed by sintering at 350°C for 6 h, calcining at 750°C for 14 h, and then annealing in oxygen at 450°C for 4 h, to obtain the single-crystal LiNi0.83Co0.12Mn0.05O2 high-nickel ternary material powder, where Dᵥ50≥4 µm, and SPAN≥1.6.
(2) The preparation of modified high-nickel material: LiNO3 and Pr(CH3COO)3 in a stoichiometric ratio, used as materials for preparing Li5Pr3O7, were added into ethanol, followed by adding single-crystal ternary powder. Then, with the doping mass percentage of praseodymium controlled at 3%, the prepared solution was stirred at 50°C until the solvent completely evaporated, and then the prepared mixture was calcined at 650°C for 2 h to obtain the high-nickel material modified by Li5Pr3O7 (denoted as LAO) of 3wt%.

### Example 9

(1) The preparation of single-crystal LiNixCoyMnzO2: Soluble sulfates of nickel, cobalt, and manganese were prepared into a solution with a total metal-ion molar concentration of 1.5 mol/L at a molar ratio (83:12:5) of nickel, cobalt, and manganese ions. The prepared solution was sequentially added with a sodium hydroxide solution (with a concentration of 6 mol/L) and an ammonia solution (with a concentration of 0.3 mol/L), followed by mixing and stirring. A co-precipitation reaction was conducted under a nitrogen atmosphere, with the pH value of the co-precipitation reaction controlled at 10 and the reaction temperature at 55°C, to obtain a hydroxide precursor (Ni0.83Co0.12Mn0.05)(OH)2. Next, the prepared hydroxide precursor was washed, dried, and added with LiOH and KCl fluxing agents, followed by sintering at 400°C for 5 h, calcining at 700°C for 18 h, and then annealing in oxygen at 550°C for 3 h, to obtain the single-crystal LiNi0.83Co0.12Mn0.05O2 high-nickel ternary material powder, where Dᵥ50≥4 µm, and SPAN≥1.6.
(2) The preparation of modified high-nickel material: LiNO3, Ce(CH3COO)3, and C4H4NZrO9·nH2O in a stoichiometric ratio, used as materials for preparing Li5Ce3Zr2O12, were added into ethanol, followed by adding single-crystal ternary powder. Then, with the total doping mass percentage of cerium and zirconium controlled at 3%, the prepared solution was stirred at 60°C until the solvent completely evaporated, and then the prepared mixture was calcined at 750°C for 2 h to obtain the high-nickel material modified by Li5Ce3Zr2O12 (denoted as LABO) of 3wt%.

### Example 10

(1) The preparation of single-crystal LiNixCoyMnzO2: Soluble sulfates of nickel, cobalt, and manganese were prepared into a solution with a total metal-ion molar concentration of 1.5 mol/L at a molar ratio (83:12:5) of nickel, cobalt, and manganese ions. The prepared solution was sequentially added with a sodium hydroxide solution (with a concentration of 6 mol/L) and an ammonia solution (with a concentration of 0.3 mol/L), followed by mixing and stirring. A co-precipitation reaction was conducted under a nitrogen atmosphere, with the pH value of the co-precipitation reaction controlled at 10 and the reaction temperature at 55°C, to obtain a hydroxide precursor (Ni0.83Co0.12Mn0.05)(OH)2. Next, the prepared hydroxide precursor was washed, dried, and added with LiOH and KCl fluxing agents, followed by sintering at 450°C for 5 h, calcining at 900°C for 12 h, and then annealing in oxygen at 600°C for 2 h, to obtain the single-crystal LiNi0.83Co0.12Mn0.05O2 high-nickel ternary material powder, where Dᵥ50≥4 µm, and SPAN≥1.6.
(2) The preparation of modified high-nickel material: LiNO3, Yb(CH3COO)3, and C4H4NMoO9·nH2O in a stoichiometric ratio, used as materials for preparing Li5Yb3Mo2O12 (X≥5, Y≥3, Z≥2, X, Y, Z are all integers, A is ytterbium, and B is molybdenum), were added into ethanol, followed by adding single-crystal ternary powder. Then, with the total doping mass percentage of ytterbium and molybdenum controlled at 3%, the prepared solution was stirred at 50°C until the solvent completely evaporated, and then the prepared mixture was calcined at 800°C for 1 h to obtain the high-nickel material modified by Li5Yb3Mo2O12 (denoted as LABO) of 3wt%.

### Comparative example 1

The preparation of single-crystal LiNixCoyMnzO2: Soluble sulfates of nickel, cobalt, and manganese were prepared into a solution with a total metal-ion molar concentration of 1.5 mol/L at a molar ratio (83:12:5) of nickel, cobalt, and manganese ions. The prepared solution was sequentially added with a sodium hydroxide solution (with a concentration of 6 mol/L) and an ammonia solution (with a concentration of 0.3 mol/L), followed by mixing and stirring. A co-precipitation reaction was conducted under a nitrogen atmosphere, with the pH value of the co-precipitation reaction controlled at 10 and the reaction temperature at 55°C, to obtain a hydroxide precursor (Ni0.83Co0.12Mn0.05)(OH)2. Next, the prepared hydroxide precursor was washed, dried, and added with LiOH and KCl fluxing agents, followed by sintering at 500°C for 6 h, calcining at 800°C for 15 h, and then annealing in oxygen at 600°C for 3 h, to obtain the single-crystal LiNi0.83Co0.12Mn0.05O2 high-nickel ternary material powder, where Dᵥ50≥4 µm, and SPAN≥1.6.

The modified high-nickel materials prepared in examples 1 to 10 and the modified high-nickel material prepared in comparative example 1 were prepared into positive electrode plates and further assembled into lithium-ion batteries, and the lithium-ion batteries were tested for relevant performance with the following specific methods and results:

### (1) Preparation of negative electrode plate

An active material graphite, silicon, a conductive agent acetylene black, a polymer, and a thickening agent carboxymethyl cellulose sodium (CMC) were dissolved in deionized water at a weight ratio of 90:5:2:2:1, followed by a uniform mixture, to prepare a negative electrode slurry. The negative electrode slurry was then applied to a copper foil, followed by drying, cold-pressing, and cutting, to obtain a negative electrode plate.

### (2) Preparation of positive electrode plate

A positive electrode active material (a high-nickel material prepared in each of examples 1 to 10 and comparative example 1), a conductive agent acetylene black, and a binder polyvinylidene fluoride (PVDF) were dissolved in a solvent N-methylpyrrolidone (NMP) at a weight ratio of 96.5:1.5:2. The resulting mixture was thoroughly stirred and mixed to obtain a uniform positive electrode slurry. Then the positive electrode slurry was uniformly applied onto a positive electrode current collector with a base coating, followed by drying, cold pressing, and cutting to obtain a positive electrode plate.

### (3) Separator

The separator was a PE separator, with its surface coated with a PVDF and alumina coating, to improve adhesion and heat resistance.

### (4) Electrolyte

Ethylene carbonate (EC), ethyl methyl carbonate (EMC), and diethyl carbonate (DEC) were mixed at a volume ratio of 1:1:1, and then LiPF6:LiFSI (2:8) was evenly dissolved in the foregoing solution, to obtain the electrolyte. In the electrolyte, a concentration of lithium salt was 1 mol/L.

### (5) Assembly of lithium-ion battery

The positive electrode plate, the separator, and the negative electrode plate were stacked in sequence, such that the separator was sandwiched between the positive electrode plate and negative electrode plate to provide separation. Then the resulting stack was wound to obtain a jelly roll. The jelly roll was welded with a tab and packaged into an aluminum housing, followed by baking for water removal at 80°C, injecting the electrolyte, and sealing, to obtain a non-charged battery. The non-charged battery was subjected to processes such as standing, thermal compressing, formation, shaping, and capacity testing, to obtain a lithium-ion battery product.

### (6) Performance tests

### 1. Capacity test

(1) The battery was left standing for 30 min.
(2) The battery was charged at 1/3C to 4.25 V and then charged at a current voltage of 4.25 V to 0.05C.
(3) The battery was left standing for 30 min.
(4) The battery was discharged at 1/3C to 2.8 V, to obtain a capacity C0.

The obtained energy was the battery energy, and the gravimetric energy density=energy/battery weight.

### 2. DCR test

The prepared secondary battery was left standing for 30 min at 25°C, and charged to 4.25 V at 1/3C and to 0.05C at a constant voltage. Then, the battery was left standing for 10 min, and then discharged at 1/3C0 until the power of the battery cell was 10% of full capacity, which was called 10%SOC. Next, the battery was standing for 60 min and discharged at 4C0 for 10s, which was recorded as the DCR value of the battery cell.

### 3. Storage test

(1) A fresh battery was left standing for 30 min at room temperature.
(2) The battery was charged at 1/3C to 4.25 V and then charged at a current voltage of 4.25 V to 0.05C.
(3) The battery was left standing for 30 min.
(4) The battery was discharged at 1/3C to 2.8 V, to obtain a capacity C0.
(5) The battery was stored in 97% SOC at 60°C and taken out every ten days for testing a capacity denoted as Cn until Cn decayed to 80%CO to obtain the corresponding storage days.

4. Element doping amount test: Analysis was made using the inductively coupled plasma (ICP) spectroscopy method in accordance with standards YS/T 1006.2-2014, GB/T 23367.2-2009, or YS/T 1028.5-2015.

### 5. Cycling test

(1) The temperature was adjusted to 25°C and kept for 2 h;
(2) The battery was left standing for 5 min;
(3) The battery was charged at 1/3C to 4.3 V and then charged at a current voltage of 4.3 V to 0.05C;
(4) The battery was left standing for 5 min;
(5) The battery was discharged at 1/2C0 to 2.8V;
(6) The battery was left standing for 5 min;
(7) Steps (3), (4), (5) and (6) were repeated until capacity fading was smaller than or equal to 80%, to obtain the corresponding cycle life in terms of cycles.

The test results are shown in Table 2 below.

In Table 2, the ranges for energy density are defined as follows: moderate range of 258-260 Wh/kg, relatively high range of 260-262 Wh/kg, and high range of 262-264 Wh/kg.

In Table 2, the ranges for DCR are defined as follows: Low range of 0.8-1.0 mΩ, moderate range of 1.0-1.2 mΩ, relatively high range of 1.2-1.4 mΩ, and high range of 1.4-1.6 mΩ.

**Table 2 Performance test of examples and a comparative example**

| | Doping mass percentage | Dopant | Single-crystal size Dᵥ50 (4µm) | Energy density (Wh/Kg) | 25°C 10%SOC DCR (mΩ) | Cycle life at 25°C, 2.8-4.3 V (cycles) | 4.3 V storage at 60°C (days) |
|---|---|---|---|---|---|---|---|
| Comparative example 1 | - | - | 5 | High | High | 1200 | 280 |
| Example 1 | 1% | LABO | 5 | Relatively high | Moderate | 2000 | 500 |
| Example 2 | 3% | LABO | 5 | High | Low | 2500 | 900 |
| Example 3 | 5% | LABO | 5 | High | Low | 2200 | 800 |
| Example 4 | 10% | LABO | 5 | Moderate | Relatively high | 2000 | 700 |
| Example 5 | 3% | LBO | 5 | High | Relatively high | 1900 | 600 |
| Example 6 | 3% | LAO | 5 | High | Low | 1600 | 800 |
| Example 7 | 3% | LBO | 5 | High | Relatively high | 1900 | 600 |
| Example 8 | 3% | LAO | 5 | High | Low | 1600 | 800 |
| Example 9 | 3% | LABO | 5 | High | Low | 2500 | 900 |
| Example 10 | 3% | LABO | 5 | High | Low | 2500 | 900 |

It can be seen from Table 2 that the doping of lanthanide La in example 5 can improve the kinetics, reduce DCR, enhance structural stability, and improve cycling and storage performance; and the doping of metal Nb in example 8 can improve the stability of the bulk phase structure and enhance cycling and storage performance. However, as compared with the two examples, co-doping of two metal elements in example 4 show more advantages. In examples 7 to 10, replacing the lanthanide La with another metal element in the solution range, and/or replacing the metal Nb with another metal element in the solution range, can both improve cycling performance and storage performance.

The foregoing descriptions are merely preferred embodiments of this application, but are not intended to limit the scope of this application. Persons skilled in the art understand that this application may have various modifications and variations. Any modification, equivalent replacement, and improvement made within the spirit and principle of this application shall fall within the protection scope of this application.

## Claims

1. A positive electrode material, **characterized in that** the positive electrode material comprises positive electrode material particles, and the positive electrode material particle comprises a matrix and a modifying element, wherein:
the matrix comprises LiNixCoyMnzO2, wherein x≥0.8, y≤0.12, and x+y+z=1; and
the modifying element comprises a rare earth element and/or a refractory metal element.

2. The positive electrode material according to claim 1, **characterized in that** the rare earth element is at least partially located on a surface of the matrix; and/or,
the refractory metal element is at least partially located in the matrix.

3. The positive electrode material according to claim 1, **characterized in that** the rare earth element comprises at least one of lanthanum, cerium, praseodymium, neodymium, promethium, samarium, europium, gadolinium, terbium, dysprosium, holmium, erbium, thulium, ytterbium, and lutetium; and/or,
the refractory metal element comprises at least one of titanium, zirconium, niobium, vanadium, molybdenum, and tungsten.

4. The positive electrode material according to claim 1, **characterized in that** the rare earth element is lanthanum; and/or,
the refractory metal element is niobium.

5. The positive electrode material according to claim 1, **characterized in that** the modifying element is combined with the matrix through doping.

6. The positive electrode material according to claim 1, **characterized in that** a doping mass percentage of the modifying element is 1% to 10% given that mass of the positive electrode material is 100%.

7. The positive electrode material according to claim 1, **characterized in that** a doping mass percentage of the modifying element is 3% to 5% given that mass of the positive electrode material is 100%.

8. The positive electrode material according to claim 1, **characterized in that** LiNixCoyMnzO2 is a single-crystal particle.

9. The positive electrode material according to claim 1, **characterized in that** Dᵥ50 of LiNixCoyMnzO2 is greater than or equal to 4 µm; and/or,
SPAN of LiNixCoyMnzO2 is greater than or equal to 1.6.

10. A preparation method of the positive electrode material according to any one of claims 1 to 9, **characterized by** comprising the following step:
mixing a modifier with LiNixCoyMnzO2, and calcining the mixture to obtain the positive electrode material, wherein
in LiNixCoyMnzO2, x≥0.8, y≤0.12, and x+y+z=1; and
the modifier comprises a rare earth element and/or a refractory metal element.

11. The preparation method of the positive electrode material according to claim 10, **characterized in that** the modifier comprises LiXAYBZO(X+3Y+5Z)/2, LiXAYO(X+3Y)/2, or LiXBZO(X+5Z)/2, X≥5, Y≥3, Z≥2, and X, Y, Z are all integers, wherein A is any one of lanthanum, cerium, praseodymium, neodymium, promethium, samarium, europium, gadolinium, terbium, dysprosium, holmium, erbium, thulium, ytterbium, and lutetium, and B is any one of titanium, zirconium, niobium, vanadium, molybdenum, and tungsten.

12. The preparation method of the positive electrode material according to claim 10, **characterized in that** the mixture is calcined at 600°C to 800°C for 1 h to 3 h.

13. A positive electrode plate, **characterized in that** the positive electrode plate comprises the positive electrode material according to any one of claims 1 to 9.

14. A secondary battery, **characterized in that** the secondary battery comprises the positive electrode plate according to claim 13.

15. An electric apparatus, **characterized in that** the electric apparatus comprises the secondary battery according to claim 14.
